# FASCICULE DE BREVET EUROPEEN

(11) **EP 3 058 578 B1**
(45) Date de publication et mention de la délivrance du brevet: **04.11.2020**
(21) Numéro de dépôt: 14798982.6
(22) Date de dépôt: 13.10.2014
(51) Int. Cl.: H01G 11/06, H01G 11/86, H01G 11/50, H01G 11/30, H01G 11/32, H01M 10/54, H01M 10/052, H01M 4/52

(54) **PROCEDE DE FABRICATION D'UNE BATTERIE DU TYPE SUPERCONDENSATEUR HYBRIDE A BASE D'ALCALIN, BATTERIE OBTENUE PAR CE PROCEDE ET PROCEDE DE RECYCLAGE D'UN MATERIAU D'ANODE D'UNE BATTERIE ALCALIN-ION**
VERFAHREN ZUR HERSTELLUNG EINER BATTERIE DES TYPS HYBRID ALCALINE SUPERCAPACITOR, BATTERIE HERGESTELLT MIT DIESEM VERFAHREN UND VERFAHREN ZUM RECYCLEN VON ANODEMATERIAL EINER ALCALIN-ION BATTERIE.
PROCESS OF MANUFACTURING A BATTERY OF THE TYPE HYBRID SUPERCAPACITOR BASED ON ALCALINE, BATTERY OBTAINED BY THIS PROCESS AND RECYCLING PROCESS OF THE ANODE MATERIAL OF AN ALCALINE-ION BATTERY

(30) Priorité: 14.10.2013 FR 1359953
(43) Date de publication de la demande: 24.08.2016
(73) Titulaire: Commissariat à l'Énergie Atomique et aux Énergies Alternatives, 75015 Paris (FR)
(72) Inventeur: PICOT, Matthieu, F-44230 Saint Sebastien sur Loire (FR); AZAIS, Philippe, F-38120 Saint Egreve (FR)
(74) Mandataire: Gevers & Orès
(86) Numéro de dépôt international: PCT/IB2014/065267
(87) Numéro de publication internationale: WO 2015/056152

(56) Documents cités:
- WO-A1-2009/105713
- CN-A- 102 544 629
- CN-A- 103 219 562
- CN-B- 101 710 632
- DE-A1-102011 109 137
- US-A- 6 150 050
- US-B1- 6 511 639
- XU ET AL: "A review of processes and technologies for the recycling of lithium-ion secondary batteries", JOURNAL OF POWER SOURCES, ELSEVIER SA, CH, vol. 177, no. 2, 14 janvier 2008 (2008-01-14), pages 512-527, XP022450299, ISSN: 0378-7753, DOI: 10.1016/J.JPOWSOUR.2007.11.074

## Description

L'invention concerne un procédé de fabrication d'un supercondensateur hybride à base d'alcalin, une batterie du type supercondensateur hybride à base d'alcalin et un procédé de recyclage d'une électrode négative d'une batterie alcalin-ion.

Un supercondensateur hybride comprend un couple d'électrodes dissymétriques, c'est-à-dire une électrode positive (cathode) comprenant du carbone activé et fonctionnant sur le principe d'une supercapacité (qui est le siège de la formation d'une double couche électrique) et une électrode négative (anode) comprenant un matériau carboné et fonctionnant sur le principe d'une batterie (matériau d'électrode apte à intercaler un élément alcalin comme le lithium, le potassium ou encore le sodium).

Lorsque la réaction au niveau de l'électrode négative fait intervenir le lithium en tant qu'élément intercalant, on parle alors de LIC (Lithium-Ion Capacitor, en anglais).

Dans un LIC, l'électrode positive (électrode du type supercapacité) limite la capacité de stockage du système. De ce fait, on utilise une partie beaucoup moins importante de la capacité maximale du matériau d'électrode négative (typiquement 372 mAh/g pour le graphite).

Par ailleurs, on connaît les batteries alcalin-ion qui sont des systèmes de stockage électrochimiques constitués d'une cathode, d'un électrolyte, d'un séparateur et d'une anode (en général en carbone dit « dur » ou du graphite).

Ce type de batterie utilise en tant qu'alcalin le lithium, le sodium ou le potassium.

Les batteries Li-ion sont particulièrement utilisées. Ce sont des systèmes de stockage électrochimiques dans lesquels la cathode peut être LiFePO₄, LiMn₂O₄, LiCoO₂, ou tout autre oxyde ou phosphate lithié, et l'électrolyte est un électrolyte à base de lithium.

La composition typique d'une batterie Li-ion est donnée en particulier dans Xu et al. Journal of Power Sources 177 (2008) 512-527.

Cette composition est donnée au tableau 1 suivant :

**Table 1 : Composition typique d'une batterie Li-ion**

| Constituant | Masse (%) |
|---|---|
| LiCoO₂ | 27,5 |
| Acier/Ni | 24,5 |
| Cu/Al | 14,5 |
| Carbone | 16 |
| Electrolyte | 3,5 |
| Polymère | 14 |

Les performances de ce type de batterie en termes de densité d'énergie leurs ont permis de s'imposer dans de nombreux marchés, comme ceux des téléphones ou des ordinateurs portables. Désormais, une demande mondiale de plus en plus importante pose le problème du recyclage des batteries Li-ion. Ce problème se pose d'abord pour des raisons de sécurité (présence de produits inflammables et d'éléments toxiques dans ces batteries) mais également pour des raisons économiques (recyclage du lithium ainsi que des métaux lourds décrits dans la table 1). L'ensemble des études économiques menées jusqu'à présent telles que reportées dans "Cost and performance of EV batteries, Final Report for the Committee on Climate Change, 21/03/2012, Element Energy Ltd. ; The market for Lithium Secondary Batteries (containing Mn) and future developments, Mitsubishi Corporation Unimetal, Battery Raw Materials Team. ; Roland Berger The Li Ion Battery Value Chain, 2011, montre clairement que les matériaux les plus valorisables sont la cathode et l'électrolyte. C'est pour cette raison que l'ensemble des efforts se concentre actuellement sur la valorisation de la cathode, l'anode étant peu onéreuse et peu valorisable.

Jusqu'à présent, deux stratégies ont été proposées pour le recyclage des matériaux d'une batterie Li-ion.

La première stratégie vise à récupérer les éléments les plus onéreux du dispositif, à savoir les métaux lourds présents dans la cathode (cobalt, nickel, etc.) ainsi que le lithium. Afin de récupérer ces éléments, des traitements chimiques ou/et physiques sont utilisés. Ces traitements passent en général par la dissolution des matériaux d'anode et de cathode puis par la précipitation sélective des éléments à récupérer, notamment, comme décrit dans Suzukia et al. Separation and Purification Technology 98 (2012) 396-401) par des techniques d'hydrométallurgie permettant une meilleure sélectivité.

Plusieurs brevets ou demandes de brevet proposent des méthodes permettant la récupération des métaux lourds, voir par exemple les demandes de brevet CN101692510, et CN102569940, ou encore du lithium, comme décrit dans les demandes internationales WO201335048 et WO201335048.

La seconde stratégie vise, quant à elle, la réutilisation ou la régénération des matériaux constitutifs de la batterie Li-ion. Par exemple, la demande de brevet US20100068605A1 décrit un dispositif permettant le renouvellement de l'électrolyte d'une batterie Li-ion sans démantèlement de celle-ci pour ensuite la réutiliser. Or, d'après la littérature, il est bien connu que les matériaux d'électrodes d'une batterie Li-ion se dégradent lors de la phase d'utilisation [Agubra et al. Materials 6 (2013) 1310-1325]. Ainsi, la demande internationale WO2011155298 propose un procédé pour l'estimation de l'avancement de dégradation des électrodes d'une batterie Li-ion. Au niveau de l'électrode négative (carbone graphite), en particulier, il a été montré qu'après une phase d'utilisation des phénomènes tels que des changements de phases peuvent avoir lieu ce qui a pour conséquence une diminution de la capacité du matériau d'électrode négative. Pour cette raison, la réutilisation du matériau d'anode dans un système de type Li-ion ou d'alcalin-ion, d'une manière générale, sans régénération de ce matériau peut avoir comme conséquence une dégradation des performances du dispositif. CN 101 710 632 B divulgue un procédé de fabrication d'une batterie, le procédé comprenant une étape de formation d'une électrode négative à partir d'un matériau d'électrode négative provenant d'une batterie alcalin-ion usée ayant perdu au moins une partie de sa capacité initiale.

WO 2009/105713 A1 décrit un procédé de fabrication d'une batterie ou d'un supercondensateur à base d'alcalin, le procédé comprend une étape de formation d'une électrode positive à partir d'un matériau d'électrode provenant d'une batterie alcalin-ion usée ayant perdu au moins une partie de sa capacité initiale

En contraste à l'enseignement de l'art antérieur, l'invention a pour but, d'une part, de recycler le matériau d'anode d'une batterie du type alcalin-ion et, d'autre part, de fournir un procédé de fabrication d'un supercondensateur hybride qui soit simple à mettre en œuvre et peu coûteux.

A cet effet, l'invention propose un procédé de fabrication d'un supercondensateur hybride à base d'alcalin caractérisé en ce qu'il comprend une étape a) de formation d'une électrode négative A à partir d'un matériau d'électrode B provenant d'une batterie alcalin-ion usée ayant perdu au moins une partie de sa capacité initiale et en ce qu'il ne comprend pas d'étape de formation d'une couche de passivation sur la surface de l'électrode négative A.

De préférence, le matériau d'électrode négative B est du graphite. Du graphite particulaire est préféré, plus particulièrement du graphite particulaire dont le diamètre moyen statistique des particules D₅₀ est compris entre 0,1 et 50 µm, bornes incluses.

Le procédé de l'invention peut comprendre, avant l'étape a), une étape b) d'élimination des sels alcalins du matériau de l'électrode négative B, de préférence par rinçage avec un solvant similaire au solvant de l'électrolyte présent initialement dans la batterie usée (par exemple un mélange de carbonates EC/DMC dans le cas d'une batterie Li-ion).

Le procédé de l'invention peut, de plus, comprendre avant l'étape a), une étape c) d'élimination de l'alcalin sous forme de métal du matériau d'électrode négative B. Cette élimination est, de préférence effectuée par passage du matériau d'électrode B dans un bain en continu d'acétonitrile ou d'éthanol.

De préférence, l'électrode négative A consiste en l'électrode négative B n'ayant pas subi de retraitement.

L'alcalin peut être choisi parmi Li, K, Na. De préférence l'alcalin est Li.

L'invention propose également un supercondensateur hybride à base d'alcalin obtenu par le procédé selon l'invention comprenant une électrode négative A formée à partir d'un matériau d'électrode négative B recyclé d'une batterie alcalin-ion usée ayant perdu au moins une partie de sa capacité initiale.

Le matériau d'électrode négative B peut être du graphite, de préférence du graphite particulaire, préférablement ayant un diamètre moyen statistique de particules D₅₀ compris entre 0,1 et 50 µm, bornes incluses.

L'alcalin de la batterie de l'invention est choisi parmi Li, K, Na. Il est de préférence, Li.

De préférence, l'électrode négative A est l'électrode négative B.

L'invention propose encore un procédé de recyclage d'une électrode négative B d'une batterie alcalin-ion usée ayant perdu au moins une partie de sa capacité initiale, comprenant une étape de fabrication d'une électrode négative A de supercondensateur hybride à base d'alcalin à partir du matériau d'électrode négative B selon l'invention ce procédé ne comprenant pas d'étape de formation d'une couche de passivation sur la surface de l'électrode négative A.

Dans ce procédé de recyclage, de préférence, le matériau d'électrode négative B est du graphite, plus préférablement du graphite particulaire, particulièrement dont le diamètre moyen statistique des particules D₅₀ est compris entre 0,1 et 50 µm, bornes incluses.

L'invention sera mieux comprise et d'autres avantages et caractéristiques de celle-ci apparaîtront plus clairement à la lecture de la description explicative qui suit et qui est faite en référence aux figures dans lesquelles :
- la figure 1 représente le voltammogramme d'un système hybride de type LIC de l'art antérieur,
- la figure 2 représente le voltammogramme d'un système hybride du type LIC selon l'invention.

L'invention est basée sur la réutilisation (recyclage) du matériau d'électrode d'une anode provenant d'une batterie du type alcalin-ion déjà usée, sans régénération de ce matériau d'anode.

Ainsi, l'invention propose un procédé de fabrication d'une batterie de type supercondensateur hybride qui comprend une étape a) de formation d'une électrode négative, notée dans le présent texte A, à partir du matériau d'anode, noté B dans le présent texte d'une batterie de type alcalin-ion provenant d'une batterie de type alcalin-ion déjà utilisée, ayant perdu au moins une partie de sa capacité initiale.

Par "déjà utilisé(e)" ou "usé(e)" ou ayant perdu au moins une partie de sa capacité initiale, on entend que le matériau d'anode B a déjà été employé au sein d'une électrode B faisant partie d'une batterie alcalin-ion. De préférence, on entend que la batterie alacalin-ion de laquelle le matériau B est issu a déjà fonctionné pendant au moins 10 cycles, de préférence le matériau d'anode B a perdu au moins 5 % de sa capacité initiale, plus préférablement au moins 10% et encore plus préférentiellement au moins 20%.

Les termes "formation d'une électrode négative A" signifient, dans l'invention, aussi bien une étape de fabrication (mise à la dimension, par exemple) de cette électrode A dans le matériau de l'électrode B que d'utilisation telle quelle, c'est-à-dire sans remise en forme ou taille différente, de l'électrode B.

Néanmoins, de préférence le matériau B est réutilisé directement sous sa forme d'électrode B, c'est-à-dire sans isolement préalable du matériau B, afin de conserver le bénéfice de la formation de la couche SEI (couche de passivation) sur l'électrode B lors de son utilisation dans la batterie alcalin-ion.

Par électrode, on entend classiquement un collecteur de courant (feuillard en aluminium, cuivre, inox) sur lequel est enduit un mélange de liant (typiquement un polymère ou mélange de polymères comme le PVDF, la carboxyméthyl cellulose, le styrène butadiène), de matériau B et optionnellement de conducteur électronique additionnel (typiquement fibre de carbone type VGCF pour vapor growth carbon fiber)

Egalement, dans l'invention, l'électrode B peut provenir de tous types de batteries alcalin-ion.

La durée de vie d'une batterie de type alcalin-ion est généralement définie par la capacité résiduelle du composant. La valeur communément admise est de fixer la fin de vie à 80% de la capacité initiale.

Ainsi, l'invention propose l'utilisation du matériau d'une électrode ayant perdu une partie de sa capacité lors de passage en batterie alcalin-ion mais possédant toujours une capacité adaptée pour une utilisation en supercondensateur hybride.

Ce matériau est le matériau d'électrode négative de la batterie du type alcalin-ion.

Dans l'invention, ce matériau est utilisé pour fabriquer une électrode négative de supercondensateur. Le matériau d'électrode négative de la batterie alcalin-ion recyclé présente l'avantage de pouvoir être utilisé sans régénération et, de plus sans la formation obligatoire de ce que l'on appelle la couche de passivation.

En effet, pour les technologies batterie alcalin-ion ou du type supercondensateur hybride à base d'alcalin, afin de pouvoir préserver une durée de vie correcte, on forme, lors de premiers cycles, une couche de passivation à la surface de l'électrode négative. Or cette couche de passivation implique une consommation importante d'électrolyte lors de sa formation.

Mais, dans l'invention, le fait de recycler une électrode issue d'une batterie type alcalin-ion implique que la couche de passivation est déjà présente et permet donc de s'affranchir du coût de formation de celle-ci.

Le matériau d'électrode négative, est dans l'invention, un matériau carboné d'intercalation d'au moins un élément alcalin tel que le lithium, le sodium ou le potassium.

Un matériau préféré dans l'invention est un matériau carboné du type graphite, et plus spécifiquement un matériau carboné du type graphite particulaire, et plus préférablement dont la taille des particules peut aller de 0,1 à 50 µm, cette taille de particules étant mesurée par granulométrie laser D₅₀.

Dans la batterie de l'invention, qui comprend cette électrode négative, l'électrolyte comprend un sel d'un métal alcalin choisi parmi les sels de sodium, les sels de potassium ou les sels de lithium, selon le type d'alcalin de la batterie et un ou plusieurs solvants organiques de ce sel.

Le ou les solvants organiques peuvent quant à eux être des solvants nitriles, des lactones, des éthers, des sulfides, ou des solvants carbonates et tout autre combinaison des solvants précédents.

Le procédé de fabrication d'un supercondensateur à alcalin-ion peut comprendre de plus une étape d'élimination des sels d'alcalin (lithium, sodium potassium) du matériau d'électrode B provenant de la batterie alcalin-ion usée, ces sels s'étant déposés sur ce matériau d'électrode B lors de son utilisation précédente dans la batterie alcalin-ion.

Cette élimination peut être effectuée par rinçage du matériau d'électrode B avec un solvant similaire à celui présent initialement dans l'électrolyte de la batterie usée (par exemple un mélange de carbonates EC/DMC (éthyl carbonate/diméthyl carbonate) dans le cas d'une batterie Li-ion).

Par "solvant similaire", on entend un solvant dont la formule comprend au moins un groupe carbonate. Ainsi, le solvant de rinçage est de préférence choisi parmi l'éthylène carbonate, l'éthyl méthyl carbonate, le propylène carbonate, le diméthyl carbonate, le diéthyl carbonate, le vinyl éthylène carbonate, les mélanges de deux ou plus de ces carbonates ou encore les mélanges de un ou plus de ces carbonates avec la butyrolactone.

Le procédé de fabrication d'un supercondensateur à alcalin-ion de l'invention peut de plus comprendre, avant l'étape a) de formation d'une électrode négative A à partir du matériau d'électrode B provenant de la batterie alcalin-ion usée est une étape d'élimination de l'alcalin sous forme de métal qui s'est formé lors de l'utilisation précédente de la batterie alcalin-ion dont provient le matériau d'électrode B.

Cette élimination peut s'effectuer par passage du matériau d'électrode B dans un bain en continu (rinçage abondant jusqu'à dissolution complète de l'alcalin précipité en surface d'électrode) d'acétonitrile ou d'éthanol.

L'invention propose également un supercondensateur hybride à base d'alcalin qui comprend une électrode négative A formée d'un matériau d'électrode B recyclé provenant d'une batterie alcalin-ion usée, ayant perdu une partie de sa capacité initiale..

Par déjà utilisée ou usée ou ayant perdu au moins une partie de sa capacité initiale, on entend que le matériau d'anode B a déjà été employé au sein d'une électrode B faisant partie d'une batterie alcalin-ion. De préférence, on entend que la batterie alacalin-ion de laquelle le matériau B est issu a déjà cyclé au moins 10 fois, de préférence a perdu au moins 5 % de sa capacité initiale, de préférence encore au moins 10% et encore plus préférentiellement au moins 20%.

Cette électrode négative A est de préférence en graphite, plus particulièrement en graphite particulaire, plus préférablement ayant un diamètre moyen D₅₀ compris entre 0,1 et 50 µm, bornes incluses.

L'invention propose encore un procédé de recyclage d'une électrode négative B provenant d'une batterie alcalin-ion usée ayant perdu au moins une partie de sa capacité initiale qui comprend une étape de fabrication d'une batterie du type supercondensateur hybride à base d'alcalin comprenant une électrode négative A en le matériau d'électrode négative B.

De préférence, l'électrode négative A est, ou correspond à, l'électrode négative B. En d'autres termes, le matériau B n'est pas isolé mais réutilisé directement formulé en électrode sans séparation des constituants de l'élctrode que sont le matériau B, le liant polymère et optionnellement le conducteur électronique additionnel.

Afin de mieux faire comprendre l'invention, on va maintenant en décrire à titre d'exemple purement illustratif et non limitatif un mode de mise en oeuvre.

### Exemple 1 :

Préparation d'un dispositif de type LIC de l'art antérieur.

Cet exemple décrit la préparation d'un dispositif de type LIC à partir d'un couple d'électrodes (négative et positive) n'ayant pas été utilisés dans une batterie type Li-ion au préalable. Ce dispositif est ensuite caractérisé par voltammétrie cyclique.

### a) Réalisation d'un dispositif de type LIC

L'électrode positive du dispositif LIC est préparée par enduction sur un collecteur en aluminium de 30 µm d'épaisseur comprenant en pourcentage massique par rapport à la masse totale de l'électrode :
- 84% de carbone activé référence YP50F (Kuraray Chemicals Co., Japon)
- 4 % d'un caoutchouc styrène-butadiène (BASF, LD471)
- 8% de noir de carbone de référence super C65 (Timcal Co., Suisse)
- 4% de carboxyméthylcellulose (Aldrich)

L'électrode négative est préparée par enduction, sur un collecteur en aluminium de 30 µm d'épaisseur, d'un mélange comprenant en pourcentage massique par rapport à la masse totale d'électrode :
- 94% de carbone graphite référence SLP30 (Timcal)
- 2 % de carbone conducteur VGCF (Vapor Grown Carbon Fiber)
- 2% CMC à 2% *(7HXF Aqualon)*
- 2% de Styrofan (LD417 51%, BASF)

Les électrodes positive et négative d'une surface égale de 10.24 cm² (3.2^{∗}3.2 cm) sont assemblées dans une cellule type cellule sachet souple (« Pouch cell » en anglais). L'électrolyte utilisé est un mélange de carbonate (éthyl carbonate/diméthyl carbonate : EC/DMC 1/1 vol/vol) contenant un sel de lithium (1M LiPF₆) et est utilisé en une quantité suffisante pour imprégner l'ensemble de la pile à poche. Le séparateur utilisé est un séparateur en polymère PDA 25® commercialisé par la société Treofan GmbH, Allemagne, de 25 µm d'épaisseur.

### b) Caractérisation du dispositif par voltammétrie cyclique

Le dispositif hybride de type LIC décrit dans la partie a) ci-dessus est testé par voltammétrie cyclique. Trois balayages successifs entre 0,5 et 4 V sont effectués à une vitesse de 10 mV/s.

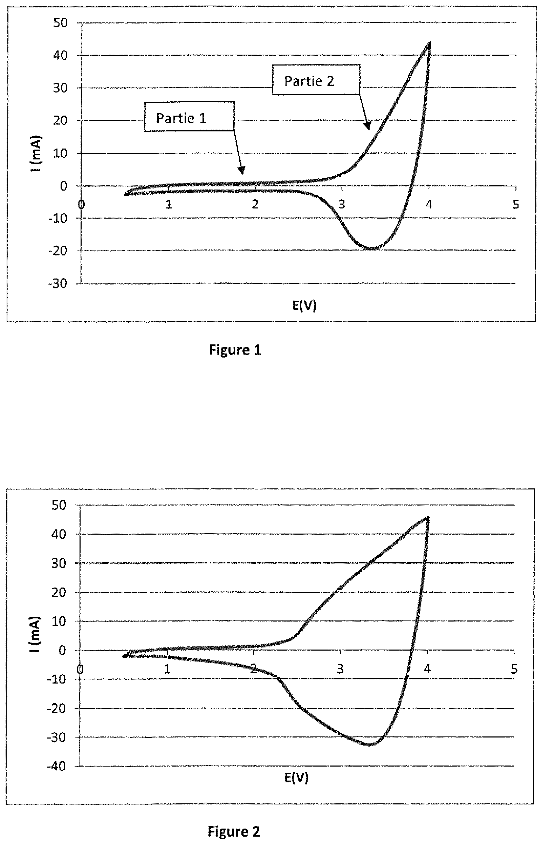

Le voltammogramme obtenu est représenté en figure 1.

Comme on le voit en figure 1, le système hybride obtenu à l'exemple 1 a le comportement attendu, c'est-à-dire qu'une première partie du voltammogramme, notée partie 1 en figure 1, entre 0,5 et 2,5 V, correspond à la partie supercapacitive du système et une seconde partie notée partie 2 en figure 1, entre 2,5 et 4 V, correspond à la partie ou l'on insère du lithium dans l'électrode type batterie du dispositif.

### Exemple 2 :

Préparation d'un dispositif de type LIC par le procédé de l'invention.

Cet exemple reprend l'expérience de l'exemple 1 mais cette fois l'électrode négative utilisée dans le dispositif de type LIC est issue d'une batterie de type Li-ion usée.

### a) Préparation d'une batterie de type Li-ion

Cette batterie est constituée d'une électrode positive en LiFePO₄ et d'une électrode négative préparée comme décrit à l'exemple 1. Les électrodes positive et négative d'une même surface égale de 10.24 cm² (3.2^{∗}3.2 cm) sont assemblées dans une cellule type cellule à sachet souple. L'électrolyte utilisé est un mélange de carbonate (EC/DMC 1.1) contenant un sel de lithium (*1M LiPF₆*) qui est utilisé en une quantité suffisante pour imprégner l'ensemble de la pile à poche. La couche de passivation est formée au premier cycle de charge/décharge puis la batterie est utilisée pendant une dizaine de cycles à un régime de cycles de charge et de décharge à un courant de charge (1C) ou de décharge (1D) correspondant à la capacité limitante de la batterie de type Li-ion, de 1C et 1D CCCV charge à courant constant dans un premier temps, jusqu'à arriver un potentiel proche du potentiel de charge avant de finir la charge à potentiel constant, pendant 15 minutes.

Ensuite, la batterie est désassemblée sous atmosphère inerte en boite à gant, l'électrode négative est rincée pendant 10 minutes dans un mélange de carbonate (EC/DMC 1/1 vol/vol) afin de retirer le sel de lithium restant. Avantageusement, l'électrode peut être passée dans un bain en continu d'acétonitrile ou d'éthanol pour éliminer le lithium potentiellement présent sous la forme de métal (cas pouvant se présenter dans le cas d'un vieillissement extrême d'une batterie Li-ion).

### b) Préparation d'un supercondensateur de type LIC selon l'invention, équipée de l'électrode négative issue de la batterie

L'électrode négative décrite ci-dessus et issue de la batterie Li-ion est utilisée telle quelle dans un supercondensateur de type LIC avec une électrode positive préparée de la même manière que décrit dans la partie a) ci-dessus.

Les électrodes positive et négative d'une surface égale de 10,24 cm² (3,2 3,2 cm) sont assemblées dans une cellule type cellule sachet souple. L'électrolyte utilisé est un mélange de carbonate (EC/DMC 1/1 vol/vol) contenant un sel de lithium (LiPF₆ 1M) et est utilisé en une quantité suffisante pour imprégner l'ensemble de la « Pouch cell ». Le séparateur utilisé est du PDA25 (Treofan GmbH, Allemagne) de 25 µm d'épaisseur.

### c) Caractérisation du supercondensateur selon l'invention par voltammétrie cyclique

Le même protocole que celui exposé dans la partie 1) b) ci-dessus, est appliqué à la batterie de type LIC obtenue à cet exemple.

Le voltammogramme obtenu est représenté en figure 2.

On voit sur la figure 2 que le voltammogramme obtenu avec le supercondensateur de type LIC de l'invention a un comportement électrochimique similaire à celui représenté en figure 1, c'est-à-dire à la batterie de type LIC de l'art antérieur.

En effet, ce voltammogramme présente deux parties distinctes : l'une, de 0,5 à 2V, signant l'aspect supercapacitif et l'autre, de 2 à 4V, spécifique de l'aspect batterie du dispositif.

D'autre part, de l'examen de l'aire sous le voltammogramme représentant la capacité du système étudié, on note que la capacité est plus élevée dans le cas d'un supercondensateur de type LIC utilisant une électrode négative issue d'une batterie de type Li-ion (Figure 2) que pour une batterie de type LIC utilisant une électrode négative non utilisée. Ceci peut être lié aux conditions de formation de la couche de passivation.

L'exemple 2 montre la possibilité d'utiliser un matériau d'électrode négative issu d'un dispositif de type Li-ion dans un dispositif de type LIC sans que cela n'affecte ses performances.

Cet exemple montre également qu'il est possible de recycler des électrodes négative de dispositif de type Li-ion usée sans traitement de ce matériau.

Bien que les exemples qui précèdent se rapportent tous à des batteries Li-ion, il apparaîtra clairement à l'homme du métier que l'on pourra utiliser tout matériau d'électrode déjà utilisée d'une batterie alcalin-ion, telle qu'une batterie K-ion ou une batterie Na-ion, dans un supercondensateur fonctionnant avec l'ion alcalin voulu.

Ainsi, la présente invention peut être appliquée à tout dispositif alcalin-ion tels que les batteries K-ion ou bien les batteries Na-ion.

## Revendications

1. Procédé de fabrication d'un supercondensateur hybride à base d'alcalin comprenant une étape a) de formation d'une électrode négative A à partir d'un matériau d'électrode négative B provenant d'une batterie alcalin-ion usée, impliquant qu'une couche de passivation est déjà présente à la surface de l'électrode négative et ayant perdu au moins une partie de sa capacité initiale , le procédé ne comprenant pas d'étape de formation d'une couche de passivation sur la surface de l'électrode négative A.

2. Procédé selon la revendication 1, **caractérisé en ce que** le matériau d'électrode négative B est du graphite, de préférence du graphite particulaire, plus préférablement ayant un diamètre moyen statistique de particules D₅₀ compris entre 0,1 et 50 µm, bornes incluses.

3. Procédé selon l'une quelconque des revendications précédentes, **caractérisé en ce qu'**il comprend, avant l'étape a), une étape b) d'élimination des sels alcalins du matériau de l'électrode négative B, de préférence par rinçage avec un solvant similaire au solvant de l'électrolyte utilisé dans la batterie alcalin-ion dont provient l'électrode négative B.

4. Procédé selon l'une quelconque des revendications précédentes, **caractérisé en ce qu'**il comprend de plus, avant l'étape a), une étape c) d'élimination de l'alcalin sous forme de métal du matériau d'électrode négative B, de préférence par passage du matériau d'électrode négative B dans un bain en continu d'acétonitrile ou d'éthanol.

5. Procédé selon l'une quelconque des revendications précédentes, **caractérisé en ce que** l'alcalin est choisi parmi Li, K, Na, de préférence l'alcalin est Li.

6. Procédé selon l'une quelconque des revendications 1 à 2, **caractérisé en ce que** l'étape a) de formation de l'électrode négative A est une étape d'utilisation de l'électrode négative B, sans retraitement.

7. Supercondensateur hybride à base d'alcalin fabriqué selon le procédé selon l'une quelconque des revendications précédentes, comprenant une électrode négative A formée à partir d'un matériau d'électrode négative B d'une batterie alcalin-ion usée ayant perdu au moins une partie de sa capacité initiale.

8. Supercondensateur selon la revendication 7, **caractérisé en ce que** le matériau d'électrode négative B est du graphite, de préférence du graphite particulaire, préférablement dont le diamètre moyen statistique des particules D₅₀ est compris entre 0,1 et 50 µm, bornes incluses.

9. Supercondensateur selon la revendication 7 ou 8, **caractérisé en ce que** l'alcalin est choisi parmi Li, K, Na, de préférence est Li.

10. Supercondensateur selon l'une des revendications 7 à 9, **caractérisé en ce que** l'électrode négative A est l'électrode négative B.

11. Procédé de recyclage d'une électrode négative B d'une batterie alcalin-ion usée ayant perdu au moins une partie de sa capacité initiale, comprenant une étape de fabrication d'une électrode négative A de supercondensateur hybride à base d'alcalin à partir du matériau de l'électrode négative B, et ne comprenant pas pas d'étape de formation d'une couche de passivation sur la surface de l'électrode négative A.

12. Procédé de recyclage selon la revendication 11, **caractérisé en ce que** le matériau d'électrode négative B est du graphite, de préférence du graphite particulaire, préférablement dont le diamètre moyen statistique des particules D₅₀ est compris entre 0,1 et 50 µm, bornes incluses.

## Patentansprüche

1. Verfahren zur Herstellung eines Hybrid-Superkondensators auf Alkalibasis, das einen Schritt a) des Bildens einer negativen Elektrode A auf Grundlage eines Materials einer negativen Elektrode B umfasst, das aus einer Alkali-Ionen-Altbatterie stammt, was bedeutet, dass an der Oberfläche der negativen Elektrode bereits eine Passivierungsschicht vorhanden ist, und das mindestens einen Teil seiner ursprünglichen Kapazität verloren hat, wobei das Verfahren keinen Schritt des Bildens einer Passivierungsschicht an der Oberfläche der negativen Elektrode A umfasst.

2. Verfahren nach Anspruch 1, **dadurch gekennzeichnet, dass** es sich bei dem Material einer negativen Elektrode B um Graphit handelt, vorzugsweise partikulären Graphit, bevorzugter mit einem mittleren statistischen Partikeldurchmesser D₅₀ im Bereich zwischen 0,1 und 50 µm, Anschlüsse eingeschlossen.

3. Verfahren nach einem der vorstehenden Ansprüche, **dadurch gekennzeichnet, dass** es vor dem Schritt a) einen Schritt b) des Entfernens der Alkalisalze aus dem Material der negativen Elektrode B umfasst, vorzugsweise durch Spülen mit einem Lösungsmittel, das dem Lösungsmittel des in der Alkali-Ionen-Batterie, aus der die negative Elektrode B stammt, verwendeten Elektrolyten ähnlich ist.

4. Verfahren nach einem der vorstehenden Ansprüche, **dadurch gekennzeichnet, dass** es vor dem Schritt a) weiter einen Schritt c) des Entfernens des Alkalis in Metallform aus dem Material einer negativen Elektrode B umfasst, vorzugsweise durch Geben des Materials einer negativen Elektrode B in ein kontinuierliches Acetonitril- oder Ethanolbad.

5. Verfahren nach einem der vorstehenden Ansprüche, **dadurch gekennzeichnet, dass** das Alkali aus Li, K, Na ausgewählt ist, vorzugsweise es sich bei dem Alkali um Li handelt.

6. Verfahren nach einem der Ansprüche 1 bis 2, **dadurch gekennzeichnet, dass** es sich beim Schritt a) des Bildens der negativen Elektrode A um einen Schritt des Verwendens der negativen Elektrode B ohne Wiederaufbereitung handelt.

7. Hybrid-Superkondensator auf Alkalibasis, der nach dem Verfahren nach einem der vorstehenden Ansprüche hergestellt wird, der eine negative Elektrode A umfasst, die auf Grundlage eines Materials einer negativen Elektrode B einer Alkali-Ionen-Altbatterie gebildet ist, das mindestens einen Teil seiner ursprünglichen Kapazität verloren hat.

8. Superkondensator nach Anspruch 7, **dadurch gekennzeichnet, dass** es sich bei dem Material einer negativen Elektrode B um Graphit handelt, vorzugsweise partikulären Graphit, dessen mittlerer statistischer Durchmesser der Partikel D₅₀ vorzugsweise im Bereich zwischen 0,1 und 50 µm liegt, Anschlüsse eingeschlossen.

9. Superkondensator nach Anspruch 7 oder 8, **dadurch gekennzeichnet, dass** das Alkali aus Li, K, Na ausgewählt ist, vorzugsweise Li ist.

10. Superkondensator nach einem der Ansprüche 7 bis 9, **dadurch gekennzeichnet, dass** es sich bei der negativen Elektrode A um die negative Elektrode B handelt.

11. Verfahren zur Wiederverwertung einer negativen Elektrode B einer Alkali-Ionen-Altbatterie, die mindestens einen Teil ihrer ursprünglichen Kapazität verloren hat, das einen Schritt des Herstellens einer negativen Elektrode A eines Hybrid-Superkondensators auf Alkalibasis auf Grundlage des Materials der negativen Elektrode B umfasst, und das keinen Schritt des Bildens einer Passivierungsschicht an der Oberfläche der negativen Elektrode A umfasst.

12. Wiederverwertungsverfahren nach Anspruch 11, **dadurch gekennzeichnet, dass** es sich bei dem Material einer negativen Elektrode B um Graphit handelt, vorzugsweise partikulären Graphit, dessen mittlerer statistischer Durchmesser der Partikel D₅₀ vorzugsweise im Bereich zwischen 0,1 und 50 µm liegt, Anschlüsse eingeschlossen.

## Claims

1. Process for manufacturing an alkaline-based hybrid supercapacitor comprising a step a) of forming a negative electrode A from a negative electrode material B originating from a used alkali-ion battery, implying that a passivation layer is already present at the surface of the negative electrode and having lost at least some of its initial capacity, the process not including any step of forming a passivation layer on the surface of the negative electrode A.

2. Process according to claim 1, **characterised in that** the negative electrode material B is graphite, preferably particulate graphite, more preferably having a statistical average diameter of particles D₅₀ between 0.1 and 50µm, limits included.

3. Process according to any one of the preceding claims, **characterised in that** it comprises, before step a), a step b) of removing alkaline salts of the material of the negative electrode B, preferably by rinsing with a solvent similar to the solvent of the electrolyte used in the alkali-ion battery, from which the negative electrode B originates.

4. Process according to any one of the preceding claims, **characterised in that** it comprises, in addition, before step a), a step c) of removing the alkaline in the form of metal of the negative electrode material B, preferably by passage of the negative electrode material B in a continuous acetonitrile or ethanol bath.

5. Process according to any one of the preceding claims, **characterised in that** the alkaline is selected from Li, K, Na, preferably the alkaline is Li.

6. Process according to any one of claims 1 to 2, **characterised in that** step a) of forming the negative electrode A is a step of using the negative electrode B, without reprocessing.

7. Alkaline-based hybrid supercapacitor manufactured according to the process according to any one of the preceding claims, comprising a negative electrode A formed from a negative electrode material B of a used alkali-ion battery having lost at least some of its initial capacity.

8. Supercapacitor according to claim 7, **characterised in that** the negative electrode material B is graphite, preferably particulate graphite, preferably of which the statistical average diameter of the particles D₅₀ is between 0.1 and 50µm, limits included.

9. Supercapacitor according to claim 7 or 8, **characterised in that** the alkaline is selected from Li, K, Na, preferably Li.

10. Supercapacitor according to one of claims 7 to 9, **characterised in that** the negative electrode A is the negative electrode B.

11. Process for recycling a negative electrode B of a used alkali-ion battery having lost at least some of its initial capacity, comprising a step of manufacturing a negative electrode A of alkaline-based hybrid supercapacitor from the material of the negative electrode B, and not comprising any step of forming a passivation layer on the surface of the negative electrode A.

12. Recycling process according to claim 11, **characterised in that** the negative electrode material B is graphite, preferably particulate graphite, preferably of which the statistical average diameter of the particles D₅₀ is between 0.1 and 50µm, limits included.
